Europäisches Patentamt

European Patent Office

Office européen des brevets

(11) Veröffentlichungsnummer: **0 503 395 A1**

# EUROPÄISCHE PATENTANMELDUNG

(21) Anmeldenummer: **92103423.7**

(22) Anmeldetag: **28.02.92**

(51) Int. Cl.5: **A01D 75/30**, A01D 67/00, A01B 73/04

(30) Priorität: **15.03.91 DE 4108449**

(43) Veröffentlichungstag der Anmeldung:
**16.09.92 Patentblatt 92/38**

(84) Benannte Vertragsstaaten:
**AT DE FR**

(71) Anmelder: **Maschinenfabriken Bernard Krone GmbH**
**Heinrich-Krone-Strasse 10**
**W-4441 Spelle(DE)**

(72) Erfinder: **Krone, Bernard**
**Bernard-Krone-Strasse 11**
**W-4441 Spelle(DE)**
Erfinder: **Kreienbaum, Hubert**
**Südlohner Weg 8**
**W-4424 Stadtlohn(DE)**
Erfinder: **Ahler, Wilhelm**
**Alter Dyk 40**
**W-4424 Stadtlohn(DE)**
Erfinder: **Horstmann, Josef, Dipl.-Ing.**
**Up de Gadde 72**
**W-4530 Ibbenbüren(DE)**

(54) **Mähmaschine.**

(57) Es handelt dich um eine Mähmaschine für den seitlich versetzten und gezogenen Anbau an einen Schlepper (14), die einen Fahrgestellrahmen (2), der sich auf Rädern (3, 3') zum Erdboden abstützt, und einen Querträger (5) aufweist, die mit mehreren um stehende Wellen (22) rotierende Mähwerkzeugen ausgerüstet ist, wobei die Mähmaschine über eine verschwenkbare Zugdeichsel (1) mit dem Schlepper (14) verbunden ist und eine Antriebsverbindung zwischen Schlepper (14) und Mähwerkzeugen besteht, wobei die Mähwerkzeuge in zwei Gruppen jeweils in getrennt angelenkten und angetriebenen Mähwerkseinheiten (20, 21) untergebracht sind, die beiden Mähwerkseinheiten (20, 21) zur Erreichung einer Schnittüberdeckung (C) an Seitenträgern (9, 10) des Fahrgestellrahmens (2) so angelenkt sind, daß ein Versatz der Rotationsachsen (31, 31') der jeweils innen liegenden Mähwerkzeuge beider Mähwerkseinheiten (20, 21) in und quer zur Fahrtrichtung (A) vorliegt und jeder der beiden Seitenträger (9, 10) des Fahrgestellrahmens (2) auf einer in Fahrtrichtung (A) liegenden Achse (8, 8') gelagert ist, so daß das Schwenken der Seitenträger (9, 10) mit der jeweils angelenkten Mähwerkseinheit (20, 21) aus einer etwa horizontalen Arbeitslage in eine annähernd vertikale Transportlage um diese Achsen (8, 8') unter Krafteinwirkung möglich ist.

FIG. I

Die Erfindung betrifft eine Mähmaschine für einen seitlich versetzten und gezogenen Anbau an einem Schlepper in einer Ausbildung gemäß dem Oberbegriff des Anspruches 1.

Mähmaschinen mit Mähwerkzeugen, die um stehende in einem starren Rahmen gelagerte Wellen rotieren, haben den Nachteil, daß mit zunehmender Arbeitsbreite die Bodenanpassung schlechter wird. Bekannte Mähmaschinen dieser Bauart (EP-A- 0 277 343) besitzen deswegen in der Praxis eine Arbeitsbreite von ca. 3 bis 3,5 Meter.

Bei bekannten Ausführungsformen von Mähmaschinen versucht man, mehrere Mähwerkseinheiten miteinander so zu kombinieren, daß eine größere Arbeitsbreite bei guter Bodenanpassung und der Möglichkeit des Straßentransportes der Maschine erreicht wird. Solche Ausführungsformen sind in der DE-A-17 82 522 dargestellt und beschrieben, wobei vorrangig Rasenmäher betroffen sind. Hier wurden mehrere Mähwerkseinheiten, die sich beim Mähen einzeln auf mindestens je zwei Rädern zum Erdboden abstützen, in Kugelgelenken pendelnd an Auslegern eines Zentralrahmens befestigt. Durch diese Art der Befestigung bleiben die Mähwerkseinheiten auch beim Hochschwenken der Ausleger in ihrer horizontalen Lage.

In Transportlage befinden sie sich nebeneinander über dem Zentralrahmen. Es können also nur sehr schmale Mähwerkseinheiten zum Einsatz kommen. Eine sichere Fixierung der Mähwerkseinheiten in Transportstellung ist mit geringem Aufwand nicht möglich. Ferner ist die Kippsicherheit nicht gewährleistet. Diese Maschinen sind durch den hohen Aufwand für die Bodenführung sehr bauaufwendig und schwer.

Eine weitere Ausführungsform einer Mähmaschine mit großer Arbeitsbreite ist bekannt (EP-B-O 178 239), die eine um mindestens 90° in einer erdbodenparallelen Ebene schwenkbare Zugvorrichtung aufweist. Die Maschine wird mit quer zur Fahrtrichtung stehendem Rahmen in Arbeitsstellung auf zwei Stützrädern gezogen. Der Straßentransport erfolgt mit parallel zur Fahrtrichtung stehendem Rahmen, wobei sich die Maschine auf zwei zusätzlichen nur für den Transport bestimmte Laufräder zum Erdboden abstützt. Die Mäharbeit wird dadurch eingeleitet, daß die Räder für den Arbeitsvorgang heruntergeklappt und die Laufräder für den Straßentransport hochgeklappt werden sowie die Zugvorrichtung so geschwenkt wird, daß die obengenannte Arbeitsstellung erreicht wird.

Bei einem derart langen und starr ausgebildetem Hauptrahmen der Mähmaschine läßt sich eine gute Bodenanpassung der Mähwerkzeuge in unebenem Gelände nicht erreichen.

Durch eine weiterhin bekannte Ausführungsform (DE-A-31 51 481) versucht man Abhilfe zu schaffen, indem der Rahmen der Mähmaschine aus mehreren Teilen besteht, die gegeneinander um in Fahrtrichtung liegende Achsen begrenzt verschwenkbar sind. Da hier kein starrer Rahmen vorliegt, wird zwar die Bodenanpassung der Mähwerkzeuge optimiert, aber der Antrieb der Mähwerkzeuge wird wesentlich aufwendiger und eine Fixierung der Mähmaschine in einer Transportstellung ist nicht möglich.

Aus der DE-U- 83 18 249 ist eine Frontmähmaschine bekannt, bei der an einem Lagerbock zum Anbau an eine genormte Dreipunkt-Frontaufhängung eines Schleppers zwei Ausleger von herkömmlichen Heckmähwerken spiegelbildlich, einseitig schwenkbeweglich und gegeneinander bezüglich der beiden inneren Mähtrommeln in Fahrtrichtung versetzt befestigt sind. Die Ausleger weisen jeweils zwei Mähtrommeln auf, die in ihrem unteren Bereich selbstdrehende Gleitteller zur Auflage auf dem Erdboden aufweisen. Am Lagerbock sind die Ausleger ingesamt jeweils um eine in einer horizontalen Ebene liegenden und in Fahrtrichtung ausgerichteten Achse um etwa 90° in eine vertikale Ausrichtung schwenkbar. Die Frontmähmaschine ist jedoch bei der Mäharbeit durch die gesamte Gewichtskraft einschließlich des Lagerbockes und der Lenker der Dreipunkt-Frontanhängung auf den Gleittellern der Mähtrommeln belastet. Eine anteilmäßige Übertragung der Gewichtskraft auf ein Fahrgestell oder auf den Schlepper ist nicht möglich. Ferner handelt es sich um eine Frontmähmaschine in einer Ausführung in "geschobener" Form, die dazu neigt, bei Hindernissen, Bodenunebenheiten o. dgl. im vorderen Bereich die Grasnarbe zu beschädigen. Diese Mähwerksform muß beim Überfahren eines Hindernisses nach vorne und oben gegen die Reibkraft der Gleitteller bewegt werden. Zum Vergleich kann hier die Bewegung einer Schubkarre über ein Hindernis in "geschobener" oder "gezogener" Form genannt werden. Eine "gezogene" Bewegung erleichtert die Überwindung des Hindernisses erheblich. Ein weiterer Nachteil besteht in der direkten schwenkbeweglichen Aufhängung der Ausleger am Lagerbock um ihre in Fahrtrichtung ausgerichtete horizontale Achsen. Die Bodenanpassung der beiden inneren Mähtrommeln ist hier nicht gewährleistet, da diese bei einer vertikalen Bewegung, also in Richtung ihrer Hochachsen, den Lagerbock und die Lenker der Dreipunkt-Frontanhängung des Schleppers mitbewegen oder um eine gedachte Achse in Fahrtrichtung verdrehen müssen. Die Beweglichkeit in den einzelnen Gelenkverbindungen ist jedoch sehr träge, so daß bei einer Arbeitsgeschwindigkeit dieser Frontmähmaschinen von bis zu 15 km/h entspr. 4,16 m/sek. eine Bodenanpassung im Bereich der Mitte nicht mehr gegeben ist.

Im Frontanbau durchläuft ein Frontmähwerk nach der DE-U-83 18 249 bei Kurvenfahrten sehr enge Radien. Bei Linkskurven hat das schon bei sehr geringem Lenkeinschlag am Schlepper, beispielsweise bei Ausgleichslenkungen um die Fahrspur zu halten, zur Folge, daß ein Streifen zwischen den beiden inneren Mähtrommeln stehen bleibt.

Es ist Aufgabe der Erfindung, eine Mähmaschine mit um stehende Wellen rotierenden Mähwerkzeugen zu schaffen, deren Gewichtskraft bei der Mäharbeit einen minimalen Bodendruck auf den Erdboden ausübt und bei sehr großer Arbeitsbreite noch eine gute Bodenanpassung auch quer zur Arbeitsrichtung gewährleistet, wobei eine maximale Transportbreite gemäß gesetzlicher Festlegung (z.B. für DE von 3 Metern nach StVZO) unterschritten wird.

Die Aufgabe wird gemäß der Erfindung gelöst durch die im kennzeichnenden Teil des Patentanspruchs 1 angegebenen Merkmale. Weitere Merkmale und vorteilhafte Ausgestaltungen der Erfindung sind in den Ansprüchen 2 bis 12 angegeben.

Bei der erfindungsgemäßen Mähmaschine sind Mähwerkseinheiten an einem Fahrgestellrahmen so befestigt, daß sie in Arbeitsstellung von diesem versetzt zueinander gleitend über den Erdboden gezogen werden.

Der Fahrgestellrahmen wiederum wird ebenfalls versetzt hinter einem Schlepper gezogen und die Mähwerkseinheiten werden einzeln, getrennt voneinander durch den Schlepper angetrieben und können einzeln oder gemeinsam in eine Transportstellung ausgehoben werden. Es wird hierdurch eine große Arbeitsbreite von annähernd zwei herkömmlichen Mähmaschinen erreicht, die auch noch zum Mähen von Randbereichen oder von Restflächen auf die Hälfte reduziert werden kann. Beispielsweise wird hier mit einer Mähwerkseinheit gemäht, wobei die zweite Mähwerkseinheit teilweise oder auch ganz ausgehoben ist. Insgesamt ist die Bodenanpassung bei großer Arbeitsbreite der Mähmaschine durch die Unabhängigkeit der einzelnen Mähwerkseinheiten voneinander auch quer zur Arbeits- oder Fahrtrichtung wie bei herkömmlichen Standardmähmaschinen mit nur halber Arbeitsbreite gegeben. In ausgehobener, nach oben geschwenkter Lage befinden sich die Mähwerkseinheiten mit zur Maschinenmitte verlagertem Schwerpunkt innerhalb der Spurbreite der Räder des Fahrgestellrahmens, wodurch die Mähmaschine insgesamt kippsicher und gut lenkbar transportiert werden kann.

Vor der Mäharbeit mit abgesenkten Mähwerkseinheiten ist die Spurbreite gegenüber der Tansportstellung zu verbreitern. Das ist vorteilhaft möglich durch die teleskopartige Gestaltung von Teilen des Fahrgestellrahmens und der Radaufhängungen.

Somit wird die Mähmaschine auch in der Arbeitsstellung kippsicher gezogen und der bzw. die von den Mähwerkseinheiten abgelegten Schwade werden nicht von den Rädern überrollt. Für die variable Schwadgestaltung sind verstellbare Schwadleiteinrichtungen an der Mähmaschine vorgesehen. Damit wird die Mähmaschine allen diesbezüglichen Praxisanforderungen gerecht. Zur Befestigung der Mähwerkseinheiten an Seitenträgern des Fahrgestellrahmens werden bekannte Gelenkanordnungen, wie beispielsweise in der DE-U- 87 01 093.3 beschrieben, genutzt.

Die Gesamtarbeitsbreite der Mähmaschine berechnet sich aus der Summe der Arbeitsbreiten der Mähwerkseinheiten abzüglich des Maßes der Schnittüberlappung beider Mähwerkseinheiten. Da der Erfindung nach im Fahrgestellrahmen der Mähmaschine Mähwerkseinheiten verschiedener Arbeitsbreite anlenkbar sind, ist die Gesamtarbeitsbreite der Mähmaschine variabel zu gestalten. Bei Mähwerkseinheiten von 1,60 m bis 2,80 m Arbeitsbreite kann die Gesamtarbeitsbreite etwa 3,10 m bis 5,50 m betragen. Das heißt, bei konstanter Qualität der Mäharbeit wird die mögliche Flächenleistung vergleichsweise nahezu verdoppelt.

Weitere Einzelheiten und Merkmale der Erfindung sind aus nachfolgender Beschreibung ersichtlich, die durch eine Ausführungsform und dazugehörige Zeichnungen verdeutlicht wird.

In diesen Zeichnungen zeigen:

Fig. 1: eine Draufsicht auf eine erfindungsgemäße Mähmaschine in Arbeitsstellung mit Schlepper bei maximal möglichem Lenkungseinschlag nach rechts;

Fig. 2: eine Schnittdarstellung nach der Linie II - II in Fig. 1;

Fig. 3: eine Rückansicht der Mähmaschine nach Fig. 1 mit in Arbeitsstellung befindlichen Mähwerkseinheiten und Rädern;

Fig. 4: eine Rückansicht der Mähmaschine nach Fig. 1 mit in Transportstellung befindlichen Mähwerkseinheiten und Rädern;

Fig. 5: eine Rückansicht der Mähmaschine nach Fig. 1 mit sich in verschiedenen Stellungen befindlichen Mähwerkseinheiten;

Fig. 6: eine Draufsicht der Mähmaschine nach Fig. 4;

Fig. 7: ein Hydraulikschaltplan der Mähmaschine

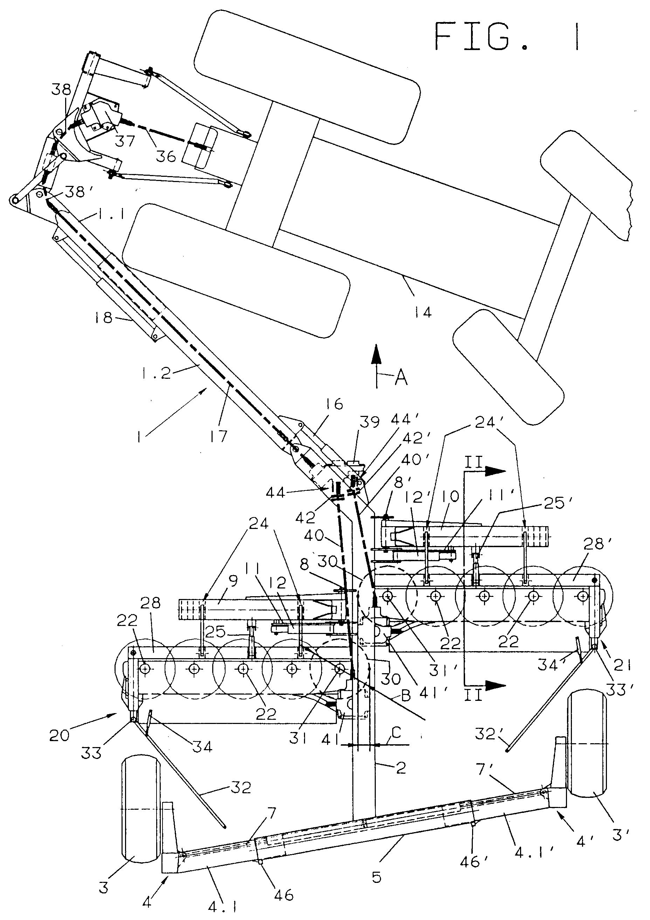

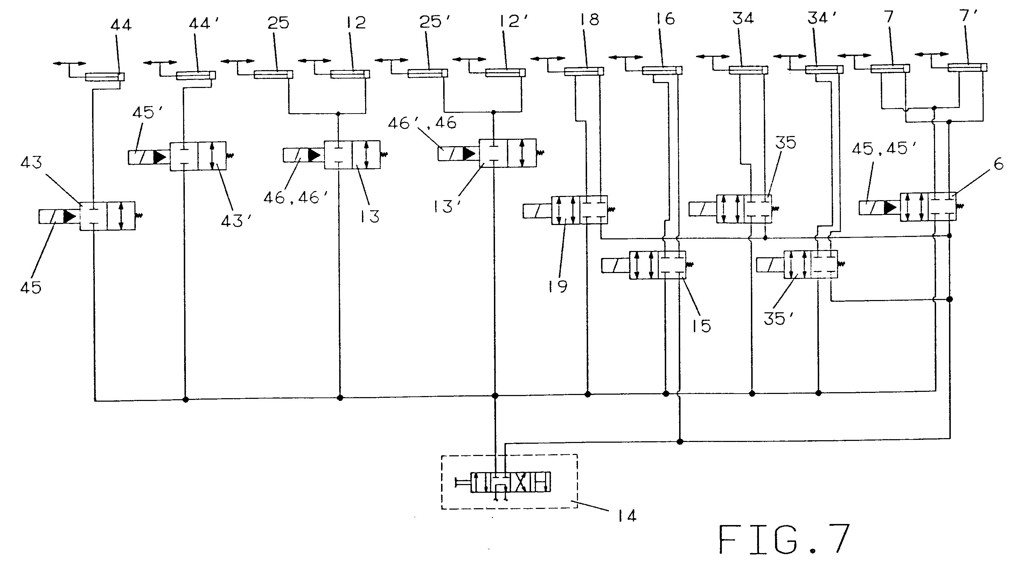

Wie aus Fig. 1 ersichtlich ist, sind an einem mit einer Zugdeichsel 1 versehenen Fahrgestellrahmen 2 zwei Räder 3, 3' befestigt. Teleskopartige Teile der Radaufhängungen 4, 4' bestehend aus einem vorzugsweise als Quadrat- oder Rechteckrohr ausgebildetem Innenrohr 4.1, 4.1' sind so in einem Querträger 5 des Fahrgestellrahmens 2 gelagert, daß sie quer zum Fahrgestellrahmen 2 in Grenzen verschiebbar sind. Die Verschiebung der Radaufhängungen 4, 4' und damit die Veränderung der Spurbreite erfolgt nach Betätigung eines Ventils 6 (Fig. 7) durch die Kraft von zwei vom Schlepper 14 aus mit Drucköl beaufschlagbaren KolbenZylinderanordnungen 7, 7'. Dies hat bei sich in Fahrtrichtung A bewegender Mähmaschine zu erfolgen, wodurch die Belastung der Räder 3, 3' quer zur Fahrtrichtung gering gehalten wird. Die Kolben-Zylinderanordnungen 7, 7' sind einerseits am Querträger 5 des Fahrgestellrahmens 2 und andererseits jeweils an der Radaufhängung 4, 4' befestigt. Sie sind so dimensioniert, daß ihre Schub- bzw. Zugkraft ein Verstellen der Spurbreite bei Stillstand der Mähmaschine nicht ermöglicht. Am Fahrgestellrahmen 2 sind zwei in Fahrtrichtung A zeigende und auch in Fahrtrichtung A versetzte Achsen 8, 8' befestigt. Diese sind Teil von scharnierartigen Befestigungselementen und dienen gleichzeitig als Drehachsen für jeweils quer zur Fahrtrichtung A liegende und nach außen zeigende Seitenträger 9, 10.

Die Seitenträger 9, 10 sind um etwa 90° zwischen einer nahezu horizontalen Lage und einer etwa vertikalen Lage um die genannten Achsen 8, 8' schwenkbar. Sie sind so gestaltet, daß ihre mögliche Schwenkbewegung durch Anschläge begrenzt wird. Zur Transportsicherung sind mechanisch lösbare Fallen 11, 11' vorgesehen.

Die Kraft zum Hochschwenken der Seitenträger 9, 10 wird von jeweils einer Kolben-Zylinderanordnung 12, 12' auf jeweiligen Seitenträgern 9, 10 übertragen. Das Herabschwenken erfolgt durch die Gewichtskraft der Seitenträger 9, 10 und der an ihnen befestigten Baugruppen. Die Kolben-Zylinderanordnungen 12, 12' sind einerseits an der unten liegenden Seite der Seitenträger 9, 10 und andererseits unten am Fahrgestellrahmen 2 gelenkig befestigt und werden durch Ventile 13, 13' vom Schlepper 14 aus angesteuert.

Die Zugdeichsel 1 dient dem Zweck, die Mähmaschine in Transportstellung direkt hinter und in Arbeitsstellung seitlich versetzt hinter dem Schlepper 14 ziehen zu können. Sie wird außermittig mit dem Schlepper 14 gekoppelt und ist relativ zum Fahrgestellrahmen 2 der Mähmaschine verschwenkbar. Dazu ist am mähmaschinenseitigen Ende der Zugdeichsel 1 eine vom Schlepper 14 aus über ein Ventil 15 zu betätigende und zweiseitig wirkende Kolben-Zylinderanordnung 16 vorgesehen. Diese ist einerseits am Fahrgestellrahmen 2 und andererseits an der Zugdeichsel 1 jeweils an stehenden Achsen gelenkig befestigt.

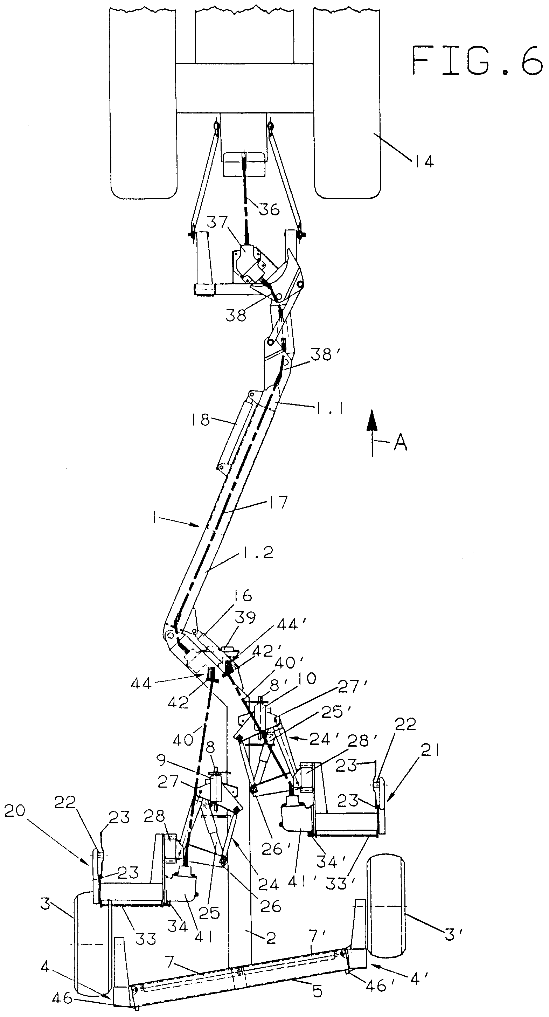

Zusätzlich ist die Möglichkeit vorhanden, die Länge der Zugdeichsel 1 zu variieren. Dazu sind die Zugdeichsel 1 und die parallel zu ihr verlaufende Gelenkwelle 17 teleskopartig gestaltet. Zur Erreichung der Längenänderung wird ebenfalls eine Kolben-Zylinderanordnung 18 genutzt, die an beiden Teleskopteilen 1.1, 1.2 der Zugdeichsel 1 befestigt und über ein Ventil 19 mit der Hydraulikanlage des Schleppers 14 gekoppelt ist. Für die Straßenfahrt mit angehängter Mähmaschine kann die Länge der Zugdeichsel 1 auf ein Minimum reduziert werden (siehe Fig. 6). Beim Arbeitsvorgang ist es möglich und erforderlich, die Zugdeichsel 1 auf die maximale Länge einzustellen.

Im Ausführungsbeispiel sind Zugdeichsel 1 und Fahrgestellrahmen 2 so gestaltet, daß die Mähmaschine in Arbeitsstellung rechts hinter dem Schlepper 14 gezogen wird. Zur Erreichung einer günstigen Schwerpunktlage ist in diesem Fall eine rechte Mähwerkseinheit 21 in Fahrtrichtung A vor einer linken Mähwerkseinheit 20 angeordnet. Aus diesem Grund werden auch der Querträger 5 und die Radaufhängungen 4, 4' so gestaltet bzw. befestigt, daß die Räder 3, 3' in einem geringen Abstand hinter den Mähwerkseinheiten 20, 21 laufen. Die Gestaltung einer Mähmaschine, die links hinter dem Schlepper 14 gezogen werden soll, hätte spiegelbildlich zu erfolgen.

An jedem der Seitenträger 9, 10 ist eine Mähwerkseinheit 20, 21 angelenkt. Hier kommen Mähwerkseinheiten 20, 21 mit um stehenden Wellen 22 rotierenden Mähwerkzeugen 23 in Betracht. Diese Mähwerkseinheiten 20, 21 werden in den Zeichnungen zum Ausführungsbeispiel nur angedeutet, sind vorrangig als Trommel- oder Scheibenmähwerke bekannt.

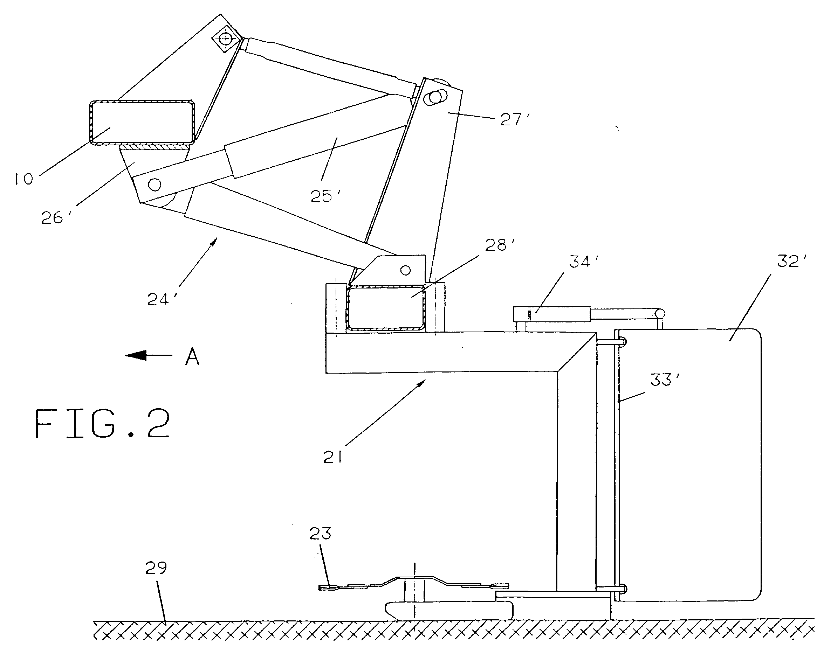

Die Gelenkanordnungen 24, 24' zur Anlenkung der Mähwerkseinheiten 20, 21 an den Seitenträgern 9, 10 sind in bekannter Weise ausgeführt worden. Die Anpassung der Mähwerkseinheiten 20, 21 an Bodenunebenheiten erfolgt am günstigsten, wenn ihre Verbindung zum ziehenen Rahmen aus Lenkerparallelogrammen besteht. Die vertikale Auslenkung der Mähwerkseinheiten 20, 21 wird durch die Geometrie der Lenkerparallelogramme bestimmt. Im Ausführungsbeispiel werden die Mähwerkseinheiten 20, 21 durch jeweils zwei Lenkerparallelogramme mit den zugehörigen Seitenträgern 9, 10 verbunden. Diese Verbindung wird durch Fig. 2 verdeutlicht.

Die jeweils außen an den Seitenträgern 9, 10 befestigten Lenkerparallelogramme können auch an anderen, quer zur Fahrtrichtung A verschobenen Befestigungspunkten angebracht werden. Dadurch ist es möglich, wie bereits aufgeführt, Mähwerkseinheiten 20, 21 verschiedener Arbeitsbreite an den Lenkerparallelogrammen zu befestigen.

Den Gelenkanordnungen 24, 24' wird eine Kolben-Zylinderanordnung 25, 25' zugeordnet. Sie ist kolbenseitig mit der Aufnahmeöse in einem Führungsbügel 26, 26' an dem jeweiligen Seitenträger 9, 10 drehbeweglich gelagert. Zylinderseitig erfolgt die Befestigung ebenfalls drehbeweglich mittels eines unteren Führungsbügels 27, 27', der mit dem Rahmen 28, 28' der jeweiligen Mähwerkseinheit 20, 21 verbunden ist. Die Aufnahmebohrung des Führungsbügel 27, 27' am Rahmen 28, 28' der Mähwerkseinheiten 20, 21 ist vorzugsweise als Langloch ausgebildet. Die Kolben-Zylinderanordnung 25, 25' ist von ihrer Lage her derart angeordnet, daß ihre Kraftrichtungslinie in einer vertikalen Fahrtrichtungsebene des Schleppers 14 liegt und bei einer Beaufschlagung mit Druckmittel eine Verkürzung des Diagonalmaßes der Lenkerparallelogramme bewirkt wird. Es werden dabei zwei vertikale Fahrtrichtungsebenen gewählt, die im Bereich des jeweiligen Schwerpunktes der Mähwerkseinheiten 20, 21 liegen.

Damit beim Überführen der Mähmaschine von einer Arbeitsin eine Transport- und/oder Wendestellung immer zunächst die Mähwerkseinheiten 20, 21 vom Erdboden 29 angehoben werden und so eine Beschädigung der Grasnarbe unterbleibt, werden die Kolben-Zylinderanordnungen 25, 25' zum Ausheben der Mähwerkseinheiten 20, 21 und die Kolben-Zylinderanordnungen 12, 12' zum Hochschwenken der Seitenträger 9, 10 durch ein gemeinsames Ventil 13, 13' betätigt und über eine gemeinsame Leitung mit Drucköl versorgt (siehe Fig. 7). Durch die ausgeführten Gelenkanordnungen 24, 24' und Kolben-Zylinderanordnungen 25, 25' wird gewährleistet, daß die Mähwerkseinheiten 20, 21 von den Seitenträgern 9, 10 gleitend über den Erdboden 29 gezogen werden, vertikal frei beweglich sind, aber auch relativ zu den Seitenträgern 9, 10 ausgehoben werden können.

Die Schnittüberdeckung C beider Mähwerkseinheiten 20, 21 ist im Sinne einer sauberen Mäharbeit erwünscht und kommt durch die versetzte Anordnung beider Mähwerkseinheiten 20, 21 zueinander zustande. Diese Anordnung wird so durch die Befestigungspunkte der Mähwerkseinheiten 20, 21 an den Seitenträgern 9, 10 des Fahrgestellrahmens 2 festgelegt, daß die Rotationsachsen 31, 31' der jeweils innen liegenden Mähwerkzeuge 23 beider Mähwerkseinheiten 20, 21 quer zur Fahrtrichtung A einen Abstand voneinander haben, der um den Wert der Schnittüberdeckung C kleiner ist als der Durchmesser B der Schnittkreise 30, 30' der genannten Mähwerkzeuge 23. Um ein gegenseitiges Berühren der Schnittkreise 30, 30' auszuschließen, sind die Mähwerkseinheiten 20, 21 auch in Fahrtrichtung A soweit zueinander versetzt, daß der Abstand der Rotationsachsen 31, 31' zueinander größer ist als der Durchmesser B der Schnittkreise 30. Der Wert der Schnittüberdeckung C verändert sich bei Kurvenfahrten des Schleppers 14 mit der Mähmaschine. Bei Rechtskurven und normal mit dem Schlepper zu fahrenden Linkskurven bleibt immer eine gewisse minimale Schnittüberdeckung erhalten. Dabei wird auch in Betracht gezogen, daß die Mähwerkseinheiten 20, 21 auch quer zur Fahrtrichtung A beweglich im Fahrgestellrahmen 2 angelenkt sind, sich also die Stellung der Mähwerkseinheiten 20, 21 zueinander beim Arbeitsvorgang in Grenzen verändern kann.

In der weiteren Ausführung der erfindungsgemaßen Mähmaschine sind an den Rahmen 28, 28' der Mähwerkseinheiten 20, 21 Schwadleitbleche 32, 32' schwenkbar gelagert. Ihre Befestigung erfolgt an stehenden Achsen 33, 33', um die die Schwenkbewegung ausgeführt werden kann. Die Stellung der Schwadleitbleche 32, 32' kann vom Schlepper 14 aus geregelt werden. Dadurch können variable Schwade von der Mähmaschine abgelegt werden. Die Regelung erfolgt über jeweils eine mit der Hydraulikanlage des Schleppers verbundene doppelt wirkende Kolben-Zylinderanordnung 34, 34'. Diese wird einerseits an dem Schwadleitblech 32, 32' und andererseits am Rahmen 28, 28' der jeweiligen Mähwerkseinheit 20, 21 befestigt. Durch Beaufschlagung der jeweiligen Kolben-Zylinderanordnung 34, 34' mit Drucköl, nach Betätigung des jeweiligen Ventils 35, 35', kann ein gewünschter Winkel der Schwadleitbleche 32, 32' zur Fahrtrichtung A eingestellt werden. Auch bei Ablage von zwei Schwaden ist durch die große Spurbreite der Räder 3, 3' gesichert, daß die Schwade nicht von den Rädern 3,3' überrollt werden.

Im dargestellten Ausführungsbeispiel erfolgt der Antrieb der Mähwerkseinheiten 20, 21 mechanisch, indem das Drehmoment von der Zapfwelle des Schleppers 14 auf die einzelnen Mähwerkzeuge 23 übertragen wird. Aus Fig. 1 ist ersichtlich, daß dies vom Schlepper aus gesehen über eine Gelenkwelle 36, ein Winkelgetriebe 37, zwei Doppelgelenke 38, 38', eine Gelenkwelle 17 und ein Verteilergetriebe 39 vorgenommen wird. Vom Verteilergetriebe 39 aus wird die Kraftübertragung verzweigt durch je eine Gelenkwelle 40, 40' zu je einem Mähwerksgetriebe 41, 41' übertragen. Vom Mähwerksgetriebe 41, 41' aus werden neben den Mähwerkzeugen 23 noch jeweils den Mähwerkseinheiten 20, 21 nachgeordnete, nicht dargestellte Erntegutaufbereiter angetrieben.

Bei einer Kurvenfahrt des Schleppers 14, insbesondere einer Rechtskurve, wie in Fig. 1 gezeigt, bei der außermittigen Befestigung der Zugdeichsel 1 am Schlepper 14 sowie der versetzt zum Schlepper 14 gezogenen Mähmaschine wird deutlich, daß die Kraftübertragung vom Schlepper 14 zur Mähmaschine über relativ große Winkel möglich sein muß. Die Gelenkwelle 36, das Winkelgetriebe 37 sowie die Doppelgelenke 38, 38' ermöglichen dies. Durch das Winkelgetriebe 37 ist zusätzlich die Möglichkeit gegeben, die Mähmaschine bei den beiden verschiedenen möglichen Zapfwellennenndrehzahlen 540 $min^{-1}$ und 1.000 $min^{-1}$ zu betreiben. Es ist so gestaltet, daß Ein- bzw. Ausgangsseite des Winkelgetriebes 37 nicht definiert ist und eine Getriebemontage verdreht und auf dem Kopf stehend möglich ist. Das Übersetzungsverhältnis des Winkelgetriebes 37 beträgt in der einen Richtung 735/540 und in der anderen Richtung 735/1000, so daß bei jeweils richtiger Montage die Ausgangsdrehzahl bei beiden jeweils verschiedenen Eingangsdrehzahlen konstant 735 min⁻¹ beträgt.

Die zwei Abtriebswellen des Verteilergetriebes 39 liegen in Fahrtrichtung A der Mähmaschine und damit winklig zur Antriebswelle. Beide Abtriebswellen rotieren mit der gleichen Drehzahl und sind jeweils mit einem Mähwerksgetriebe 41, 41' verbunden. Diese Verbindung besteht aus Gelenkwellen 40, 40' mit schaltbaren Kupplungen 42, 42'. Dadurch besteht die Möglichkeit, die Mähwerkseinheiten 20, 21 einzeln zu- bzw. abzuschalten. Dies kann vom Schlepper 14 aus vom Schlepperfahrer vorgenommen werden, indem ein jeweils zugehöriges Hydraulikventil 43, 43' betätigt wird. Das Abschalten einzelner Mähwerkseinheiten 20, 21 erfolgt aber auch zwangsweise, wenn die betreffende Mähwerkseinheit 20, 21 durch den zugehörigen Seitenträger 9, 10 aus der horizontalen Arbeitsstellung nach oben verschwenkt wird. Die hydraulische Kolben-Zylinderanordnungen 12, 12' zum Ausheben der Seitenträger 9, 10 sind mit hydraulischen Kolben-Zylinderanordnungen 44, 44' der Kupplungen 42, 42' in den Gelenkwellen 40, 40' schaltungstechnisch verbunden (siehe Fig. 7).

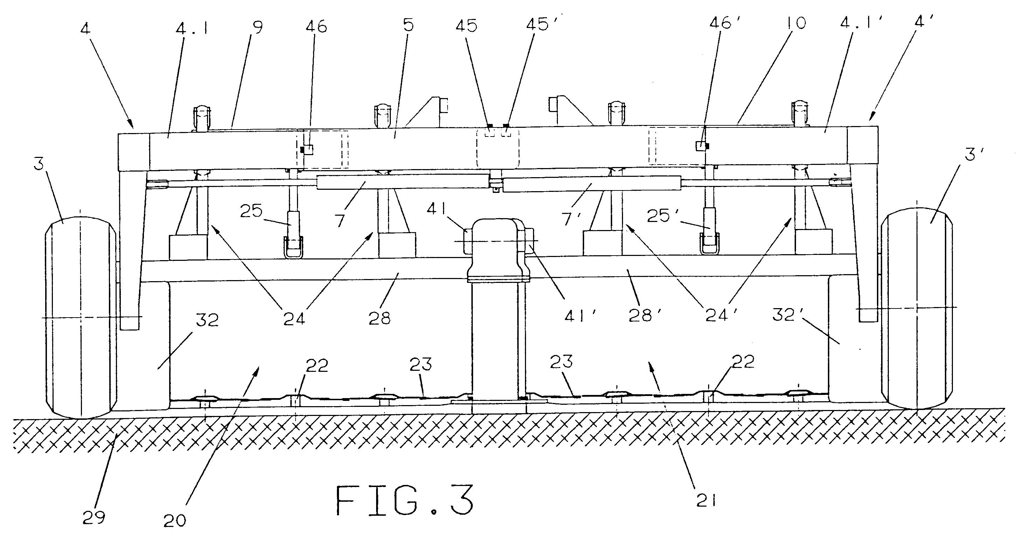

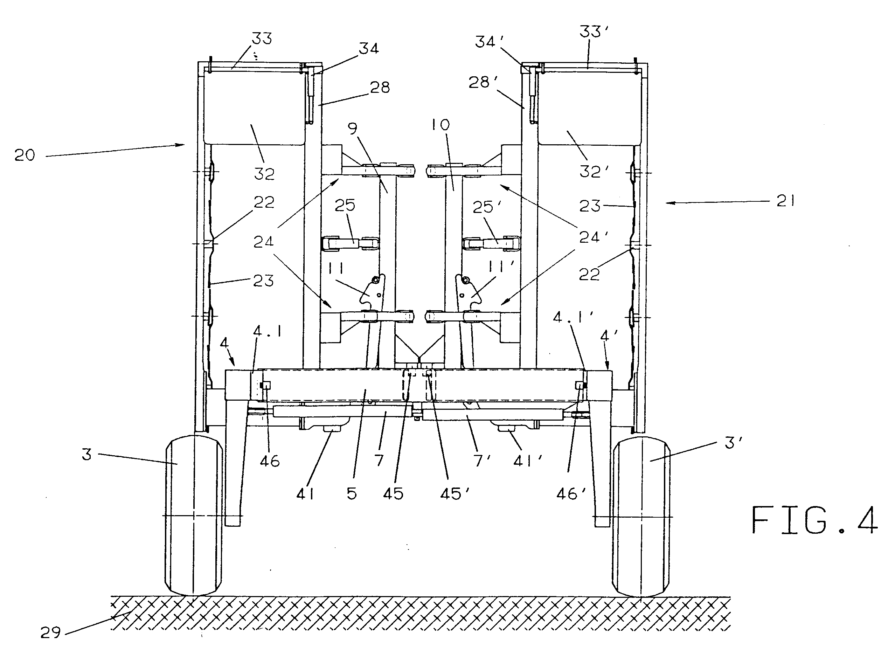

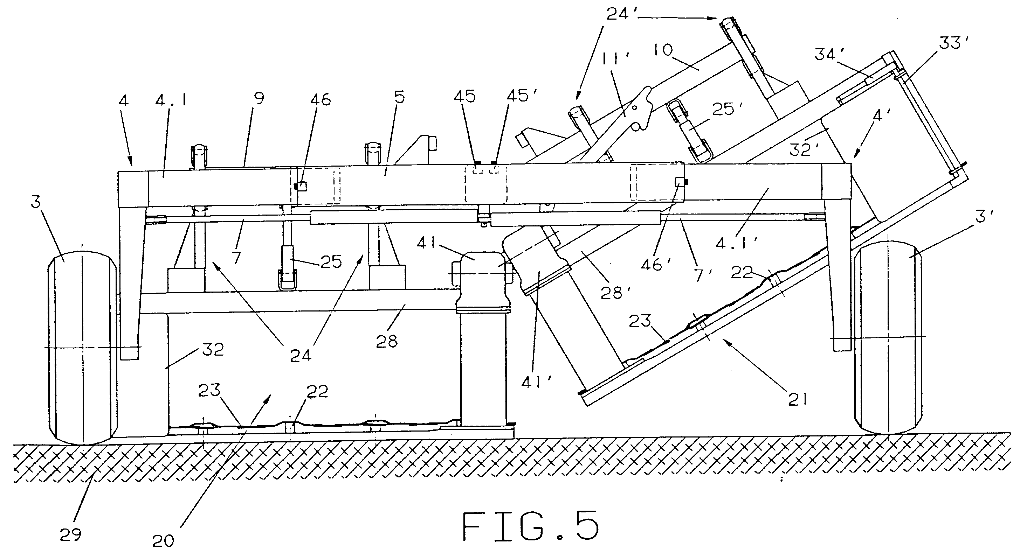

Aus den Fig. 3, 4 und 5 sind insbesondere bestimmte einstellbare Positionen der Mähwerkseinheiten 20, 21 und der Seitenträger 9, 10 zum Fahrwerksrahmen 2 erkennbar. In Fig. 6 ist im Gegensatz zur Fig. 1 die Zugdeichsel 1 in Transportstellung verschwenkt und in ihrer minimal möglichen Länge dargestellt. Die Spurbreite der Räder 3, 3' ist ebenfalls auf ihr Minimalmaß eingestellt und die Seitenträger 9, 10 mit den Mähwerkseinheiten 20, 21 befinden sich in Transportstellung.

Der in Fig. 7 dargestellte Hydraulikschaltplan zeigt alle zur erfindungsgemäßen Mähmaschine gehörenden Hydraulikbaugruppen.

Dies sind im einzelnen:
- doppelt wirkende Kolben-Zylinderanordnung 18 zur Längeneinstellung der Zugdeichsel 1
- doppelt wirkende Kolben-Zylinderanordnung 16 zum Verschwenken der Zugdeichsel 1
- zwei doppelt wirkende Kolben-Zylinderanordnungen 7, 7' zum Einstellen der Spurbreite der Räder 3, 3'
- zwei doppelt wirkende Kolben-Zylinderanordnungen 34, 34' zum Einstellen der Stellung der Schwadleitbleche 32, 32'
- zwei einfach wirkende Kolben-Zylinderanordnungen 25, 25' zum Ausheben der Mähwerkseinheiten 20, 21 relativ zu den Seitenträgern 9, 10
- zwei einfach wirkende Kolben-Zylinderanordnungen 12, 12' zum Hochschwenken der Seitenträger 9, 10
- zwei einfach wirkende Kolben-Zylinderanordnungen 44, 44' an den Kupplungen 42, 42' der Gelenkwellen 40, 40' - Steuerventile 6, 13, 13', 15, 19, 35, 35', 43, 43'.

Aus dem Hydraulikschaltplan gemäß Fig. 7 wird vor allem deutlich, in welcher Weise die Kolben-Zylinderanordnungen 12, 12' zum Hochschwenken der Seitenträger 9, 10 mit den Kolben-Zylinderanordnungen 25, 25' zum Ausheben der Mähwerkseinheiten 20, 21, den Kolben-Zylinderanordnungen 44, 44' an den Kupplungen 42, 42' der Gelenkwellen 40, 40' und mit den Kolben-Zylinderanordnungen 7, 7' für die Einstellung der Spurbreite der Räder 3, 3' verknüpft sind. Weiterhin vorhandene Endschalter 45, 45' 46, 46' für die Signalisierung der vertikalen Endstellung der Seitenträger 9, 10 und der maximalen Spurbreite der Räder 3, 3' sind mit den elektrohydraulischen Bauelementen verschaltet. Die Aufgaben aller hydraulischen Bauelemente wurden bereits vorstehend beschrieben.

Von der Bedienungsperson, beispielsweise dem Schlepperfahrer, ist zur Vorbereitung der Mäharbeiten auf der Wiese oder dem Acker durch Betätigung der genannten Hydraulikbaugruppen die Zugdeichsel 1 auszufahren und auszuschwenken und die Radspurbreite auf ein Maximum zu verbreitern. Dann können die Seitenträger 9, 10 herabgeschwenkt und die Mähwerkseinheiten 20, 21 zum Erdboden 29 heruntergelassen werden, was durch Betätigung eines Ventils 13, 13' für jede Mähmaschinenseite erfolgt. Diese Ventile 13, 13' werden dann bei der Mäharbeit so eingestellt, daß der zugehörige Ölkreis drucklos ist (Schwimmstellung), sich also die Mähwerkseinheiten 20, 21 auf dem Erdboden 29 gleitend allen Bodenunebenheiten anpassen können, ohne daß vertikale Kraftrückwirkungen auf die Seitenträger 9, 10 entstehen. Nun ist der Antrieb der Mähwerkseinheiten 20, 21 zuzuschalten. Bei Beginn der Mäharbeiten sind die Schwadleitbleche 32, 32' in die gewünschte Stellung zu bringen, was durch Betätigung der zugehörigen Hydraulikventile 35, 35' erfolgt. Bei Abschluß der Mäharbeiten ist in umgekehrter Reihenfolge zu verfahren.

**Patentansprüche**

1. Mähmaschine für einen seitlich versetzten und gezogenen Anbau an einen Schlepper (14), die einen Fahrgestellrahmen (2), der sich auf Rädern (3, 3') zum Erdboden (29) abstützt, und einen Querträger (5) aufweist, die mit mehreren um stehende Wellen (22) rotierenden Mähwerkzeugen (23) ausgerüstet ist, wobei die Mähmaschine über eine verschwenkbare Zugdeichsel (1) mit dem Schlepper (14) verbunden ist und eine Antriebsverbindung zwischen Schlepper (14) und Mähwerkzeugen (23) besteht, dadurch gekennzeichnet, daß die Mähwerkzeuge (23) in an sich bekannter Weise in zwei Gruppen jeweils in getrennt angetriebenen, an Seitenträgern (9, 10) angelenkten sowie in und quer zur Fahrtrichtung (A) versetzten Mähwerkseinheiten (20, 21) untergebracht sind, wobei die Seitenträger (9, 10) mit der jeweils angelenkten Mähwerkseinheit (20, 21) unter Krafteinwirkung aus einer etwa horizontalen Arbeitslage in eine annähernd vertikale Transportlage durch Verschwenken um in Fahrtrichtung (A) liegende Achsen (8, 8') überführbar sind, daß die beiden Mähwerkseinheiten (20, 21) in an sich bekannter Weise durch Gelenkanordnungen (24, 24') mit den Seitenträgern (9, 10) des Fahrgestellrahmens (2) derart verbunden sind, daß die Mähwerkseinheiten (20, 21) den Seitenträgern (9, 10) nachgeordnet, also von ihnen gezogen sind und die Gelenkanordnungen (24, 24') aus mindestens einem Lenkerparallelogramm bestehen und zur parallelen Anhebung bzw. Absenkung eines Rahmens (28, 28') der Mähwerkseinheiten (20, 21) eine mit Druckmittel beaufschlagbare Kolben-Zylinderanordnung (25, 25') zwischen dem Rahmen (28, 28') der Mähwerkseinheiten (20, 21) und dem jeweilig zugeordneten Seitenträger (9, 10) angebracht ist und daß bei einem nach rechts versetzt vom Schlepper (14) gezogenen Fahrgestellrahmen (2) die im Fahrgestellrahmen (2) rechts angelenkte Mähwerkseinheit (21) in Fahrtrichtung (A) vor der links angelenkten Mähwerkseinheit (20) positioniert ist und bei einem nach links versetzt vom Schlepper (14) gezogenen Fahrgestellrahmen (2) die im Fahrgestellrahmen (2) links angelenkte Mähwerkseinheit (20) in Fahrtrichtung (A) vor der rechts angelenkten Mähwerkseinheit (21) positioniert ist.

2. Mähmaschine nach Anspruch 1, dadurch gekennzeichnet, daß ein Versatz ihrer Rotationsachsen (31, 31') der jeweils innen liegenden Mähwerkzeuge (23) beider Mähwerkseinheiten (20, 21) in und quer zur Fahrtrichtung (A) vorliegt, derart, daß ein Querversatz kleiner und und ein Abstandsmaß der Rotationsachsen (31, 31') zueinander größer als ein Schnittkreisdurchmesser (B) dieser Mähwerkzeuge (23) ist.

3. Mähmaschine nach den Ansprüchen 1 und 2, dadurch gekennzeichnet, daß die Spurbreite ihrer Räder (3, 3') des Fahrgestellrahmens (2) durch Krafteinleitung auf ihre Radaufhängung (4, 4') einstellbar ist.

4. Mähmaschine nach den Ansprüchen 1 bis 3, dadurch gekennzeichnet, daß Querträger 5 und/oder die Radaufhängung (4, 4') so ausgestaltet bzw. befestigt sind, daß die Räder (3, 3') in geringem Abstand hinter den Mähwerkseinheiten (20, 21) laufen.

5. Mähmaschine nach den Ansprüchen 1 bis 4, dadurch gekennzeichnet, daß am mähmaschinenseitigen Ende der Zugdeichsel (1) ein Verteilergetriebe (39) angeordnet ist, welches eingangsseitig durch eine Antriebsverbindung mit einer Zapfwelle des Schleppers (14) gekoppelt ist und ausgangsseitig mit jeweils einem zu den Mähwerkseinheiten (20, 21) gehörendem Getriebe (41, 41') durch Gelenkwellen (40, 40') verbunden ist und welches eine einzelne oder gemeinsame Inbetriebnahme der Mähwerkseinheiten (20, 21) ermöglicht.

6. Mähmaschine nach den Ansprüchen 1 bis 5, dadurch gekennzeichnet, daß die schwenkbar am Fahrgestellrahmen (2) angebrachte Zugdeichsel (1) in ihrer Länge variabel einstellbar ist.

7. Mähmaschine nach den Ansprüchen 1 bis 6, dadurch gekennzeichnet, daß an den Mähwerkseinheiten (20, 21) bzw. am Fahrgestellrahmen (2), in Fahrtrichtung (A) hinter den Mähwerkseinheiten (20, 21) Schwadleiteinrichtungen (32, 32') um stehende Achsen (33, 33') schwenkbar angebracht sind, wobei die Stellung der Schwadleiteinrichtungen (32, 32') vom Schlepper (14) aus durch Stellvorrichtungen (34, 34'; 35, 35') bestimmt wird und eine variable Schwadgestaltung möglich ist.

8. Mähmaschine nach den Ansprüchen 1 bis 7, dadurch gekennzeichnet, daß die Seitenträger (9, 10) mit den zugehörigen Mähwerkseinheiten (20, 21) jeweils durch die Krafteinwirkung einer, zwischen den Seitenträgern (9, 10) und dem Fahrgestellrahmen (2) gelenkig befestigten, Kolben-Zylinderanordnung (12, 12') zwischen Transport- und Arbeitsstellung schwenken können.

9. Mähmaschine nach den Ansprüchen 1 bis 8, dadurch gekennzeichnet, daß die Kolben-Zylinderanordnungen (25, 25') zur parallelen Aushebung der Mähwerkseinheiten (20, 21) und zum Verschwenken der Seitenträger (9, 10) jeder Mähmaschinenseite in an sich bekannter Weise so dimensioniert und miteinander gekoppelt sind, daß beim Aushebevorgang immer zuerst die Mähwerkseinheit (20, 21) angehoben wird und dann der Seitenträger (9, 10) mit der Mähwerkseinheit (20, 21) aus der etwa horizontalen Lage nach oben verschwenkt wird und beim Vorgang des Absenkens diese Vorgänge in umgekehrter Reihenfolge vonstatten gehen.

10. Mähmaschine nach den Ansprüchen 1 bis 9, dadurch gekennzeichnet, daß ein Antrieb der einzelnen Mähwerkseinheiten (20, 21) nur bei nahezu in horizontaler Lage befindlichen zugehörigen Seitenträgern (9, 10) möglich ist und dieser Antrieb zwangsweise bei Erreichung einer bestimmten maximalen Schrägstellung der Seitenträger (9, 10) im Verteilergetriebe (39) oder einer nachgeordneten Antriebseinheit (40, 40'; 41, 41') unterbrochen wird.

11. Mähmaschine nach einem der Ansprüche 1 bis 10, dadurch gekennzeichnet, daß bekannte Schaltelemente (13, 13'; 45, 45') als Bedienungsverriegelung vorhanden sind, so daß es nur möglich ist, die Spurbreite der Räder (3, 3') zwischen ihrem Minimalmaß und ihrem Maximalmaß zu verstellen, wenn sich die Seitenträger (9, 10) mit den Mähwerkseinheiten (20, 21) in ihrer nahezu vertikalen Transportstellung befinden.

12. Mähmaschine nach Anspruch 4, dadurch gekennzeichnet, daß die Gelenkanordnungen (24, 24') zur Befestigung der Mähwerkseinheiten (20, 21) an den Seitenträgern (9, 10) aus jeweils zwei Lenkerparallelogrammen bestehen und die vom Fahrgestellrahmen (2) aus in Fahrtrichtung (A) gesehen außen liegenden Lenkerparallelogramme in verschiednenen Abständen zum Fahrgestellrahmen (2) an den Seitenträgern (9, 10) anzubringen sind, so daß die Möglichkeit der Befestigung von Mähwerkseinheiten (20, 21) variabler Arbeitsbreite vorhanden ist.

FIG. 1

FIG.2

10

26'

24'

25'

27'

28'

34'

32'

33'

21

A

23

29

EP 0 503 395 A1

10

FIG.3

EP 0 503 395 A1

FIG.4

EP 0 503 395 A1

FIG.5

EP 0 503 395 A1

FIG.6

FIG.7

EP 0 503 395 A1

Europäisches
Patentamt

**EUROPÄISCHER RECHERCHENBERICHT**

Nummer der Anmeldung

EP    92 10 3423
Seite 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | US-A-4 858 417 (PRIEFERT ET AL.)<br><br>* Spalte 2, Zeile 57 - Spalte 6, Zeile 39; Abbildungen 1-15 *<br>--- | 1,2,4,6, 8-10 | A01D75/30<br>A01D67/00<br>A01B73/04 |
| A | DE-U-9 014 438 (H. NIEMEYER SÖHNE)<br>* Seite 4, Zeile 19 - Seite 6, Zeile 19; Abbildungen 1-4 *<br>--- | 1,2,6,8 | |
| A | EP-A-0 289 773 (BERNARD KRONE)<br>* Seite 3, Zeile 30 - Zeile 53; Abbildungen 1-3 *<br>--- | 1,4-6 | |
| A | FR-A-2 446 586 (STARK)<br>* Seite 3, Zeile 26 - Seite 6, Zeile 13; Abbildungen 1,2 *<br>--- | 1,8,9 | |
| A | US-A-4 343 142 (ALLEN)<br>* Spalte 12, Zeile 8 - Spalte 15, Zeile 14; Abbildungen 1-11 *<br>--- | 1,3,4 | |
| A | DE-U-8 807 161 (HEINRICH CLAUSING)<br>* Seite 8, letzter Absatz - Seite 10, Absatz 2; Abbildungen 1,2 *<br>--- | 1,8 | **RECHERCHIERTE SACHGEBIETE (Int. Cl.5 )**<br><br>A01D<br>A01B |
| A | FR-A-2 608 362 (KUHN)<br><br>* Seite 6, Zeile 8 - Seite 9, Zeile 32; Abbildungen 1-3 *<br>--- | 1,4,6,9, 12 | |
| A | EP-A-0 332 552 (KUHN)<br>* Spalte 3, Zeile 22 - Spalte 8, Zeile 13; Abbildungen 1-5 *<br>--- | 1,4-7 | |
| D,A | DE-U-8 318 249 (MERK)<br>* Seite 11, Absatz 3 - Seite 13, Absatz 2; Abbildung *<br>--- | 1,8 | |

-/--

Der vorliegende Recherchenbericht wurde für alle Patentansprüche erstellt

| Recherchenort | Abschlußdatum der Recherche | Prüfer |
|---|---|---|
| DEN HAAG | 07 JULI 1992 | WILLIAMS M.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................
& : Mitglied der gleichen Patentfamilie, übereinstimmendes Dokument

EPO FORM 1503 03.82 (P0403)

Europäisches
Patentamt

**EUROPÄISCHER RECHERCHENBERICHT**

Nummer der Anmeldung

EP    92 10 3423
Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | DE-U-8 701 093 (BERNARD KRONE)<br>* Seite 8, Zeile 20 - Seite 15, Zeile 4; Abbildungen 1-3 *<br>--- | 9 | |
| D,A | EP-A-0 178 239 (KUHN)<br>--- | | |
| A | US-A-3 751 889 (OVERESCH)<br>--- | | |
| A | FR-A-2 128 153 (HERRIAU)<br>--- | | |
| A | GB-A-1 506 702 (SISIS EQUIPMENT)<br><br>----- | | |
| | | | **RECHERCHIERTE SACHGEBIETE (Int. Cl.5)** |

Der vorliegende Recherchenbericht wurde für alle Patentansprüche erstellt

| Recherchenort | Abschlußdatum der Recherche | Prüfer |
|---|---|---|
| DEN HAAG | 07 JULI 1992 | WILLIAMS M.J. |

EPO FORM 1503 03.82 (P0403)